Europäisches Patentamt

European Patent Office

Office européen des brevets

(19)

(11) Veröffentlichungsnummer: **0 270 721 B1**

# EUROPÄISCHE PATENTSCHRIFT

(12)

(45) Veröffentlichungstag der Patentschrift: **24.04.91**

(51) Int. Cl.⁵: **G01B 5/00**

(21) Anmeldenummer: 86810576.8

(22) Anmeldetag: 09.12.86

(54) **Messvorrichtung zur Ermittlung der Abmessungen eines Gegenstandes in drei Dimensionen.**

(43) Veröffentlichungstag der Anmeldung:
**15.06.88 Patentblatt 88/24**

(45) Bekanntmachung des Hinweises auf die
Patenterteilung:
**24.04.91 Patentblatt 91/17**

(84) Benannte Vertragsstaaten:
**AT BE CH DE ES FR GB GR IT LI LU NL SE**

(56) Entgegenhaltungen:
EP-A- 0 034 799   DE-A- 2 330 197
DE-A- 3 234 470   FR-A- 2 094 282
GB-A- 979 928   US-A- 4 251 922
US-A- 4 411 402

(73) Patentinhaber: **Erowa AG**
**Winkelstrasse 8**
**CH-5734 Reinach(CH)**

(72) Erfinder: **Schneider, Rudolf**
**Gondiswinkel**
**CH-5734 Reinach(CH)**

(74) Vertreter: **Rottmann, Maximilian R.**
**c/o Rottmann + Quehl AG Glattalstrasse 37**
**CH-8052 Zürich(CH)**

## Beschreibung

Die vorliegende Erfindung betrifft eine Messvorrichtung zur Ermittlung der Abmessungen eines Gegenstandes in drei Dimensionen nach dem Oberbegriff des Patentanspruchs 1 bzw. 2.

Bei solchen bekannten Messvorrichtungen werden die Abmessungen des zu vermessenden Gegenstandes dadurch ermittelt, dass der Meßschlitten in eine geeignete Höhe verfahren und dann die z.B. horizontal verschiebbare Meßschiene soweit ausgefahren wird, bis eine daran vorgesehene Tastfläche den Gegenstand berührt. Aus dem Mass der Verschiebung der Meßschiene kann eine Dimension des Gegenstandes in horizontaler Richtung abgeleitet werden. Zur Ermittlung einer vertikalen Dimension wird die Meßschiene soweit ausgefahren, bis sie den zu vermessenden Gegenstand übergreift, und der Meßschlitten wird soweit abgesenkt, bis eine andere Tastfläche an der Meßschiene den Gegenstand berührt. Aus der Höhenlage des Schlittens kann eine weitere Dimension, nämlich in vertikaler Richtung abgeleitet werden.

Da der Moment der Berührung der Tastfläche mit dem Gegenstand nicht ohne weiteres zu bestimmen ist bzw. da eine gefühlsmässige Verschiebung z.B. der Meßschiene zum Gegenstand hin soweit bis sie diesen gerade berührt, viel zu ungenau wäre, verwendet man Messtaster, z.B. in Form von Messuhren, die die Berührung des Gegenstandes mit der erforderlichen Genauigkeit registrieren.

Allgemein bekannte Messtaster arbeiten unidirektional linear, d.h., eine lineare Dimensionsänderung in einer vorgegebenen Richtung (und nur in dieser Richtung) wird proportional in eine Anzeige der Messvorrichtung umgesetzt. Um also die Dimensionen, die Dimensionsabweichungen oder eine Dimensionsänderung eines Werkstückes in zwei oder gar mehreren verschiedenen Richtungen zu messen, musste daher entweder die verwendete Messvorrichtung inklusive Messtaster umgebaut und neu justiert werden, oder es waren zwei oder mehr unabhängig voneinander arbeitende Messvorrichtungen erforderlich. Dies hat sich in einem Mehraufwand an Arbeitszeit und/oder finanzieller Investition niedergeschlagen.

Eine solche, kompliziert aufgebaute Messvorrichtung zur Ermittlung der Abmessungen eines Werkstücks in drei Dimensionen ist aus der US-A-4 251 922 bekannt. Bei dieser Vorrichtung sind für die Vermessung aller drei Dimensionen drei unabhängig voneinander arbeitende Messanordnungen vorhanden, was die gesamte Vorrichtung erheblich verteuert. Aus der DE-A-2 330 197 ist es zwar bekannt, Werkstücke drehbar zu lagern, um diese auszumessen, doch ist aus dieser Druckschrift kein Hinweis darauf zu entnehmen, das Werkstück ohne Umrüsten der Messvorrichtung in allen drei Dimensionen ausmessen zu können. In der DE-A-3 234 470 schliesslich ist ein Mehrkoordinaten-Tastkopf beschrieben. Dieser ist aber sehr kompliziert aufgebaut und scheint aufgrund seines komplizierten Aufbaus auch empfindlich gegen rauhe Behandlung und Verschleiss zu sein, was die Messgenauigkeit erheblich stören kann.

Es ist die Aufgabe der vorliegenden Erfindung, diese Nachteile zu vermeiden und eine Messvorrichtung der eingangs genannten Art so zu verbessern, dass sie rascher und universeller einsetzbar ist, namentlich dass mit Hilfe dieser Messvorrichtung ein Gegenstand in mehreren unterschiedlichen Richtungen vermessen werden kann, ohne den Aufbau der Messvorrichtung ändern oder diese neu justieren zu müssen. Schliesslich soll die Vorrichtung kompakt und preisgünstig, gleichzeitig aber hochpräzise sein und zur Bestimmung von Dimensionsabweichungen gegenüber einer vorgegebenen Standarddimension, zur Ermittlung der Rundlaufgenauigkeit von rotierbaren Werkstücken oder zur Bestimmung der Lage eines Werkstückes gegenüber einer Referenzlage geeignet sein.

Gemäss der Erfindung wird diese Aufgabe bei einer Messvorrichtung der eingangs genannten Art durch die vorrichtungen gemäß den Patentansprüchen 1 bzw. 2 gelöst.

Dadurch ist zum einen erreicht, dass auf begueme Art rotationssymmetrische Gegenstände von allen Seiten her vermessen werden können, zum anderen, dass bei blockierter Meßschiene oder blockiertem Schlitten präzise Messungen z.B. der Rundlaufgenauigkeit von rotationssymmetrischen Körpern oder der Dimensionsänderungen von Gegenständen ermöglicht werden, und zum dritten, dass alle Messungen, die beliebige Messrichtungen innerhalb eines Sektors von 90° beeinhalten, ohne Veränderung oder Neujustierung der Vorrichtung durchgeführt werden können.

Weiterbildungen des Erfindungsgegenstandes und bevorzugte Ausführungsformen desselben sind in den abhängigen Patentansprüchen 3 bis 15 umschrieben.

Im folgenden wird ein Ausführungsbeispiel des Erfindungsgegenstandes, unter Bezugnahme auf die beiliegenden Zeichnungen, näher erläutert. In den Zeichnungen zeigen:

Fig. 1

eine schematische Vorderansicht der erfindungsgemässen Messvorrichtung mit geschnittener Grundplatte;

Fig. 1a-1c

drei verschiedene Beispiele von Einsätzen in die Gegenstandsaufnahme;

Fig. 2

eine schematische Vorderansicht der erfindungsgemässen Messvorrichtung ohne eingespannten Gegenstand und ohne angebrachten Messtaster;

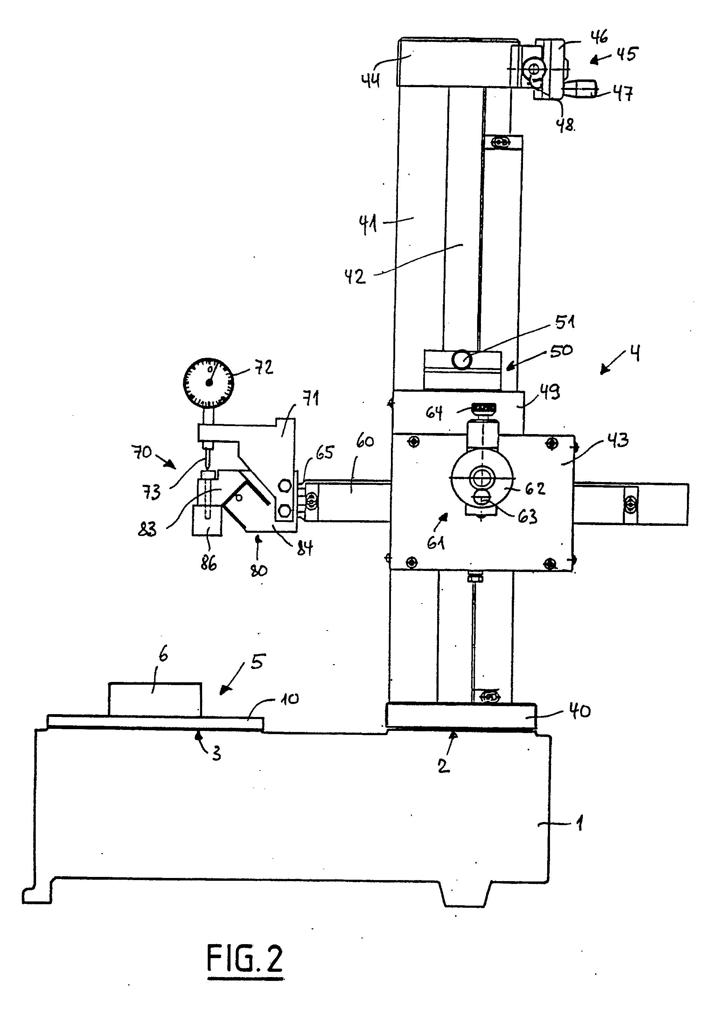

Fig. 3
eine Ansicht ähnlich Fig. 2, aber mit einem eingespannten Werkzeug während einer ersten Messung;

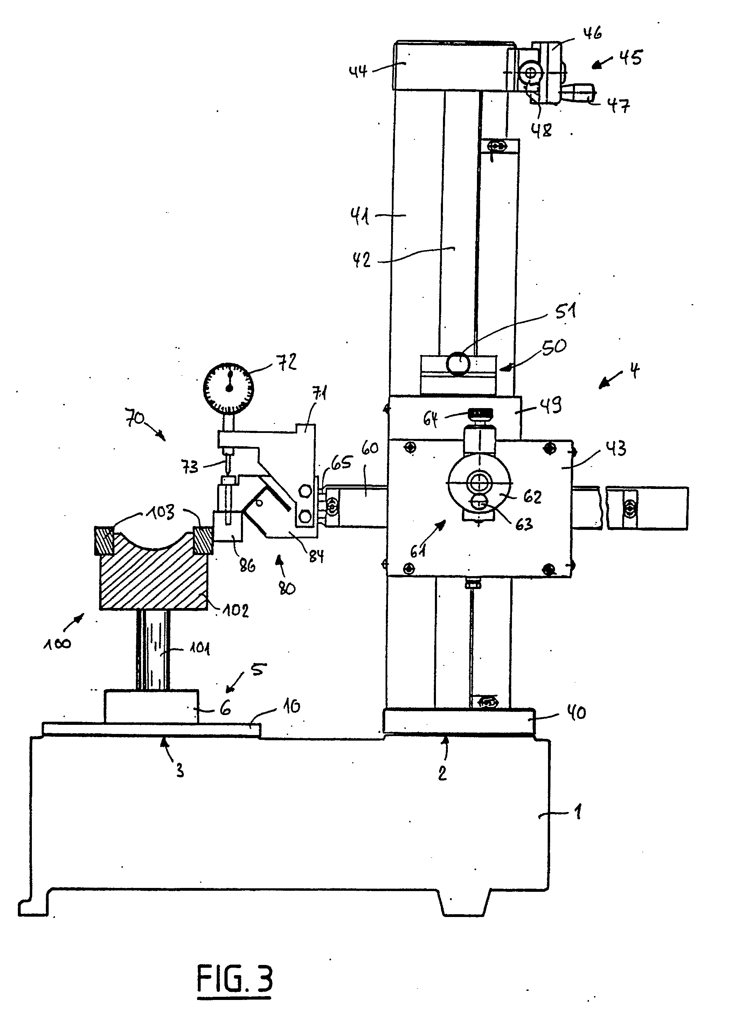

Fig. 4
eine Ansicht wie in Fig. 3, während einer zweiten
Messung;

Fig. 5
eine vergrösserte Seitenansicht des Messtasters in
Ruhelage;

Fig. 6
eine vergrösserte Seitenansicht des Messtasters
beim Einwirken einer Messkraft;

Fig. 7
eine schematische Detailansicht der Arretiervorrichtung, teilweise geschnitten;

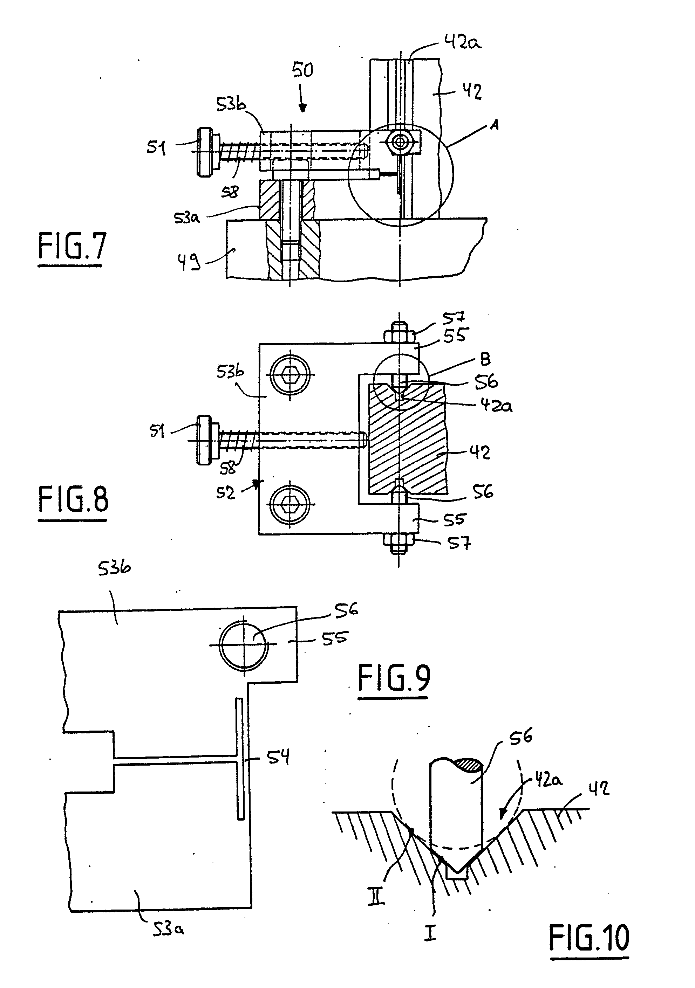

Fig. 8
eine Ansicht der Arretiervorrichtung nach Fig. 7 von
oben;

Fig. 9
das Detail A von Fig. 7; und

Fig. 10
das Detail B von Fig. 8.

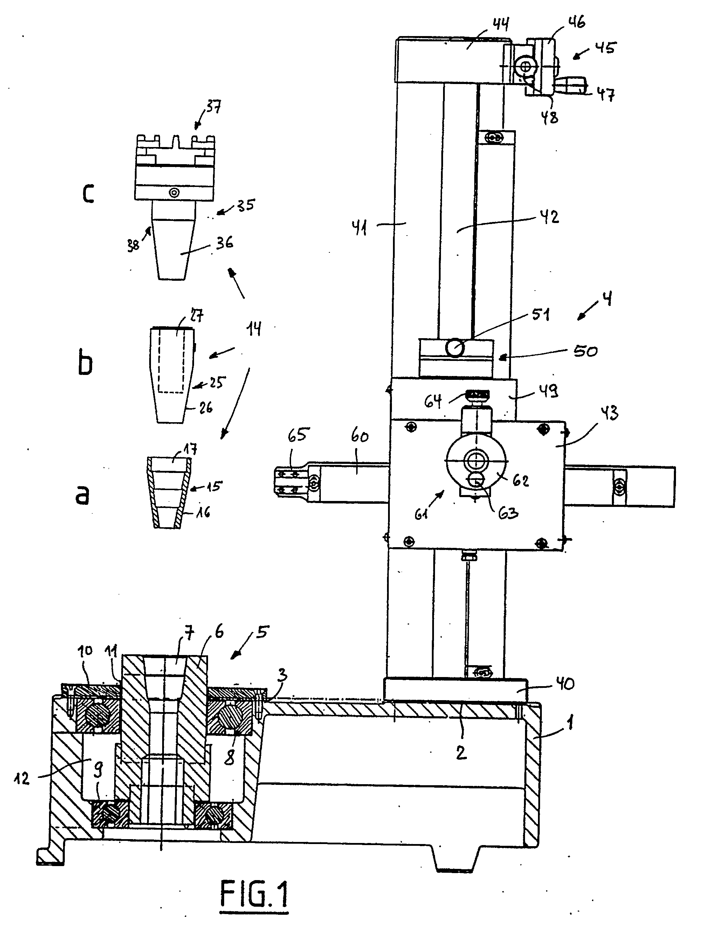

Die in den Fig. 1 bis 4 dargestellte Messvorrichtung weist einen Grundplattenkörper 1 auf, der
vorzugsweise als starres Gussbauteil ausgebildet
und zwei exakt plane, in derselben Ebene angeordnete Oberflächenbereiche 2 und 3 besitzt. Am
Oberflächenbereich 2 ist eine gesamthaft mit 4
bezeichnete Meßschlitten-Anordnung befestigt, z.B.
angeschraubt, auf deren nähere Ausbildung im folgenden noch eingegangen werden wird. In den
Oberflächenbereich 3 eingelassen ist eine gesamthaft mit 5 bezeichnete Gegenstandsaufnahme. Diese umfasst eine als Spannorgan für den auszumessenden Gegenstand dienende Hülse 6, welche eine
zentrisch angeordnete, gegen oben offene, konische Aufnahmebohrung 7 besitzt. Zweckmässigerweise können die Form und die Abmessungen
dieser Bohrung 7 einem genormten Werkzeugschaft entsprechen, damit ein solches Werkzeug
zwecks Ausmessung direkt in die Gegenstandsaufnahme 5 eingesetzt werden kann. Die Hülse 6 ist
mittels zweier im Abstand voneinander in einer
Vertiefung 12 des Grundplattenkörpers 1 angeordneter Kugellager 8 und 9 spielfrei drehbar gelagert,
wobei das obere Kugellager 8 durch einen Abdeckring 10 bedeckt ist, der eine mittige Bohrung 11
zum Durchtritt der Hülse 6 aufweist; gegebenenfalls kann zwischen Kante der Bohrung 11 und
Hülse 6 eine (nicht dargestellte) Dichtung bekannter Bauart eingelegt sein.

Wenn der auszumessende Gegenstand keinen
konischen Schaft aufweist, der direkt formschlüssig
in die Aufnahmebohrung 7 der Hülse 6 passt, können gemäss Fig. 1a bis 1c zusätzliche
Anpassungs-Spannelemente 14 vorgesehen sein.

Die Fig. 1a zeigt im Querschnitt eine Reduzierhülse 15, die einen Oberflächenbereich 16 besitzt,
welcher in Form und Abmessungen genau der Aufnahmebohrung 7 der Hülse 6 entspricht. Damit
kann sie direkt und formschlüssig in die Aufnahmebohrung 7 der Hülse 6 eingesteckt werden. Die
Reduzierhülse weist eine konische Aufnahmebohrung 17 mit geringeren Abmessungen auf, z.B. zur
Aufnahme eines Werkzeuges, das einen schlankeren, konischen Schaft besitzt.

Die Fig. 1b zeigt eine schematische Seitenansicht eines z.B. hydraulischen Spannfutters 24, welches einen in Form und Abmessungen der Aufnahmebohrung 7 der drehbaren Hülse 6 entsprechenden Oberflächenbereich 26 besitzt, so dass das
Spannfutter 25 direkt formschlüssig in die Hülse 6
eingesetzt werden kann. Das Spannfutter ist mit
einer z.B. zylindrischen Aufnahmebohrung 27 versehen, in welche Werkzeuge oder andere Gegenstände mit einem zylindrischen Schaft eingespannt
werden können.

Die Fig. 1c zeigt eine schematische Seitenansicht eines Aufspann-und Zentrierelementes 35,
dessen Kopfteil 37 mit einem (nicht dargestellten)
Gegenelement zusammenarbeitet, welches den zu
vermessenden Gegenstand trägt. Solche Aufspann-
und Zentrierelemente werden z.B. als hochgenaue
Schnellspann-Kupplungen für Elektroden an elektroerosiven Bearbeitungsmaschinen verwendet. Das
Aufspann- und Zentrierelement 35 besitzt einen
Schaft 38 mit einem Oberflächenbereich 36, der in
Form und Abmessungen wiederum genau der Aufnahmebohrung 7 in der drehbaren Hülse 6 entspricht, so dass das Element 35 ebenfalls direkt
formschlüssig in die Hülse 6 eingesetzt werden
kann.

Es versteht sich, dass die in den Fig. 1a bis 1c
dargestellten Anpassungselemente 14 lediglich einige Beispiele sind. Je nach Gegebenheiten bzw.
auszumessendem Gegenstand können andersartige Anpassungselemente vorgesehen sein, oder die
drehbare Hülse 6 kann anstatt mit einer konischen
Bohrung 7 mit anderen, geeigneten Spannmitteln
ausgerüstet sein. Wesentlich ist nur, dass die Hülse 6 in axialer und radialer Richtung spielfrei und
drehbar gelagert sowie in der Lage ist, einen auszumessenden Gegenstand unverrückbar aufzunehmen.

Die Meßschlitten-Anordnung 4 umfasst generell
eine Montageplatte 40, an welcher eine Führungssäule 41 derart angebracht ist, dass sie exakt senkrecht zum ebenen Oberflächenbereich 3 verläuft.
Die Führungssäule 41 ist mit einer Führungsschiene 42 versehen, auf welcher ein gegen oben und
unten verschiebbarer Meßschlitten 43 gelagert ist.
Die Lagerung des Schlittens 43 auf der Schiene 42
erfolgt zweckmässigerweise mittels bekannter Kugellinearführungen (nicht dargestellt), in der Weise, dass die Führungsschiene 42 beidseitig angeordnete, im Querschnitt V-förmige Führungsnuten besitzt, in welchen sich Kugeln abwälzen, die beweglich im Schlitten aufgenommen sind. Solche Linearführungen gewährleisten bekanntlich eine sehr präzise, praktisch spielfreie, wartungsarme Lagerung eines Bauteiles, welches entlang einer Geraden zu verschieben ist.

Zum Antrieb des Meßschlittens 43 ist an einem Kopfteil 44 der Führungssäule 41 ein Antrieb 45 vorgesehen, der ein Antriebsrad 46 mit Betätigungsgriff 47 umfasst. Mittels eines Umschaltknopfes 48 kann der Antrieb von einem Schnellgang zur Grobverschiebung des Schlittens 43 in einen Langsamgang zur Feinverschiebung des Schlittens 43 umgeschaltet werden. Für den Antrieb des Schlittens kommt irgendeine bekannte Lösung in Betracht, die sich als zweckmässig erweist, z.B. ein Seilzug-Antrieb, ein Zahnriemen-Antrieb oder dgl.; im vorliegenden Zusammenhang braucht nicht näher darauf eingegangen zu werden.

Der Schlitten 43 ist mit einer Arretiervorrichtung 50 versehen, die am Schlittengehäuse 49 befestigt ist und mit der Führungsschiene 42 zusammenarbeitet. Die Arretiervorrichtung kann durch einen Betätigungsknopf 51 in Betrieb gesetzt werden und dient dazu, den Schlitten 43 bezüglich seiner Höhenlage unverrückbar zu fixieren. Auf Einzelheiten der Arretiervorrichtung 50 wird später, im Zusammenhang mit den Fig. 7, 8, 9 und 10, noch näher eingegangen werden.

Ferner nimmt der Schlitten 43 eine Meßschiene 60 auf, die im Beispielsfall in horizontaler Richtung verschiebbar gelagert ist. Jedenfalls erstreckt sich die Bewegungsrichtung der Meßschiene rechtwinklig zur Bewegungsrichtung des Schlittens 43. Die Führung der Schiene 60 kann zweckmässigerweise entsprechend wie vorher geschildert ausgebildet sein, d.h. als Kugellinearführung. Zur Verschiebung der Meßschiene 60 dient wiederum ein Antrieb 61 mit Betätigungsrad 62, Griff 63 und Umschaltknopf 64, mit dem von Schnell- auf Langsamgang umgeschaltet werden kann. Das eine Ende 65 der Meßschiene 60, das gegen die Gegenstandsaufnahme 5 hin gerichtet ist, ist zur Aufnahme eines Abtastorgans vorbereitet; darauf wird im folgenden noch näher eingegangen werden. Schliesslich kann der Schlitten 43 noch mit einer weiteren Arretiervorrichtung versehen sein (nicht dargestellt), die der Arretiervorrichtung 50 entspricht und dazu dient, die Meßschiene 60 bezüglich ihrer horizontalen Bewegung unverrückbar zu blockieren.

Gemäss Fig. 2 ist das Ende 65 der Meßschiene 60 mit einem Abtastorgan versehen, das generell mit 70 bezeichnet ist. Dieses umfasst einen Messtaster 80, der anschliessend im Zusammenhang mit den Fig. 5 und 6 näher erläutert wird, und einen bezüglich der Meßschiene 60 starr angeordneten Träger 71, der eine Messuhr 72 bekannter Bauart aufnimmt. Der Messtaster 80 besitzt einen starren Bereich 84, der mit dem Ende 65 der Meßschiene 60 fest verbunden ist, und einen beweglichen Bereich 83, der einen Tastkopf 86 trägt. Der Fühler 73 der Messuhr 71 liegt auf dem beweglichen Bereich 83 auf, so dass die Messuhr 71 jegliche Verschiebung des beweglichen Bereichs 83 gegenüber dem starren Bereich 84 betragsmässig anzeigt.

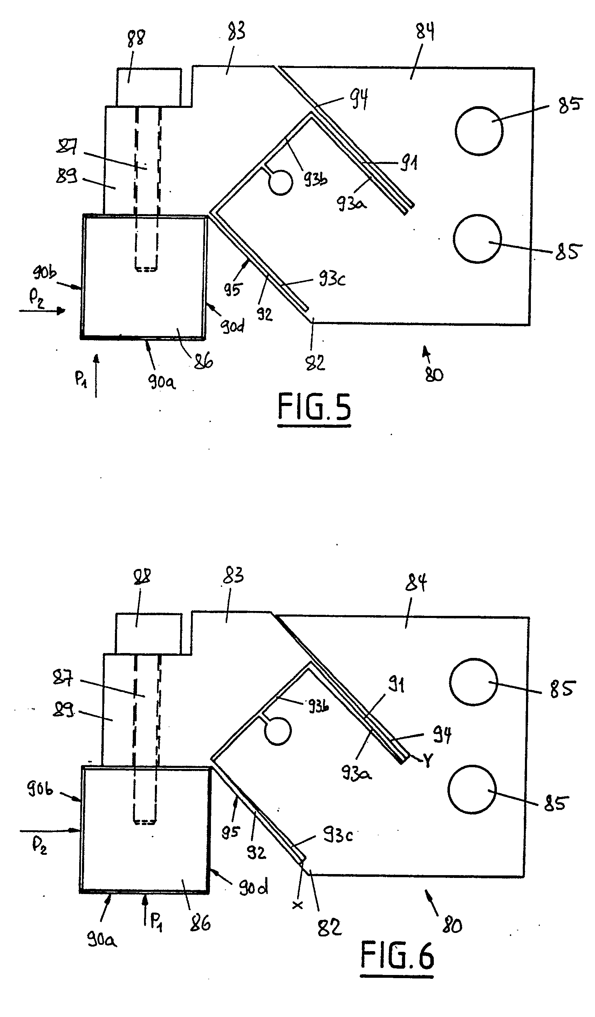

Aus der Fig. 5 ist der grundsätzliche Aufbau des Messtasters 80 ersichtlich. Er besitzt im Beispielsfall einen Tastkörper 82, der wie schon erwähnt in einen ersten Bereich 83 und einen zweiten Bereich 84 unterteilt ist. Diese beiden Bereiche 83 und 84 sind gegeneinander beweglich bzw. verschiebbar, wie im folgenden noch erklärt werden wird.

Der zweite Bereich 84 ist mit zwei Befestigungsbohrungen 85 versehen, mit deren Hilfe der Messtaster-Bereich 84 am Ende 65 der Meßschiene 60 verankert ist. Der erste Bereich 83 ist mit dem zweiten Bereich 84 beweglich verbunden und trägt einen Tastkopf 86, der mittels einer Schraube 87 starr an einem Fortsatz 89 des ersten Bereichs 83 des Tastkörpers 82 befestigt ist. Der Tastkopf 86 ist im Beispielsfall durch einen kubischen Körper gebildet, welcher zumindest zwei Messflächen 90a und 90b aufweist. Diese Messflächen sind plan bearbeitet und verlaufen zueinander unter einem Winkel von 90°. Je nach Anwendungsfall kann der Tastkörper 86 eine andere Form besitzen, z.B. eine prismatische Form, bzw. kann anstelle der ebenen Messflächen auch Meßspitzen oder Messkanten aufweisen.

Die bewegliche Koppelung des ersten Bereiches 83 mit dem zweiten Bereich 84 des Tastkörpers 82 erfolgt über elastisch verformbare Verbindungsglieder, die gegenüber den Messrichtungen und damit auch gegenüber den Messflächen 90a und 90b, in einem Winkel von 45° verlaufen. Im Beispielsfall sind zwei Verbindungsglieder 91 und 92 vorgesehen, die Teile des Tastkörpers 82 sind, welcher an sich einstückig ausgebildet ist, d.h. die Bereiche 83 und 84 des Tastkörpers 82 bestehen aus ein und demselben Körper. Die Unterteilung in die zwei Bereiche 83 und 84 erfolgt dadurch, dass mehrere Schlitze 93a - 93c sowie 94 vorgesehen sind, die die beiden Bereiche 83 und 84 voneinander trennen.

Aus der Fig. 5 ist ersichtlich, dass der Tastkörper 82 eine unter einem Winkel von 45° zu den Messflächen 90a und 90b verlaufende Seitenfläche 95 aufweist; durch diese Ausbildung ergibt sich der freie Zugang zu einer weiteren Messfläche 90d. Parallel zu dieser Seitenfläche 95, also ebenfalls unter einem Winkel von 45°, erstreckt sich in geringem Abstand der Schlitz 93c, und zwar derart, dass ein erstes Verbindungsglied 92 gebildet ist; dieses ist der verbleibende Materialsteg im Tastkörper 82, welcher den ersten Bereich 83 mit dem zweiten Bereich 84 verbindet.

Der Schlitz 93c setzt sich über einen rechtwinklig dazu verlaufenden Schlitz 93b (der seinerseits wiederum in einem Winkel von 45° zu den Messflächen 90a und 90b verläuft) in einen Schlitz 93a fort, der mit dem letztgenannten Schlitz 93b einen rechten Winkel einschliesst und damit zum Schlitz 93c parallel verläuft, jedoch in gewissem Abstand dazu. Parallel zu jenem Schlitz 93a, in geringem Abstand, ist schliesslich ein sich bis an den Rand des Tastkörpers 82 erstreckender Schlitz 94 vorgesehen, so dass zwischen diesem und dem Schlitz 93a ein Materialsteg verbleibt, der das andere Verbindungsglied 91 bildet.

Wesentlich ist, wie nachfolgend noch erläutert werden wird, dass die als Verbindungsglieder dienenden Stege 91 und 92 exakt unter einem Winkel von 45° zu den Messflächen 90a und 90d verlaufen. Andererseits ist es aber nicht von ausschlaggebender Bedeutung, dass die Verbindungsglieder 91 und 92 einstückige Teile des Tastkörpers 82 sind; ebensogut ist es möglich, die Bereiche 83 und 84 des Tastkörpers 82 als unabhängige Einzelteile auszubilden und diese mit zwei Blattfedern (nicht dargestellt) miteinander zu verbinden. Diese übernehmen dann die Aufgabe der Stege 91 und 92, wobei aber darauf zu achten ist, dass der Längsverlauf der Blattfedern, in unbelastetem Zustand, unter einem Winkel von 45° zu den Messflächen 90a und 90b erfolgt.

Wenn nun (gemäss Fig. 6) eine Kraft in Richtung des Pfeiles $P_1$ auf die Messfläche 90a einwirkt, hat diese grundsätzlich das Bestreben, sich linear ebenfalls in Richtung des Pfeiles $P_1$ zu verschieben. Da der erste Bereich 83 des Tastkörpers 82 und damit der Tastkopf 86 schwenkbar am zweiten, starren Bereich 84 des Tastkörpers gelagert sind, wird der Tastkopf 86 zu einer Bewegung in Richtung des Pfeiles $P_1$ und gleichzeitig in Richtung des Pfeiles $P_2$ veranlasst. Dies darum, weil der erste, bewegliche Bereich 83 über die beiden Stege 91 und 92, die unter einem Winkel von 45° zu den Messrichtungen verlaufen, mit dem zweiten, starren Bereich 84 verbunden ist. An deren Uebergang zum Tastkörper-Bereich 44, d.h. an den Punkten X und Y (Fig.6) bilden sich dadurch eine Art Schwenkachsen, um welche sich der verschiebbare Bereich 83 bewegt.

In der Fig.6 ist die maximal mögliche Verschiebestellung des Tastkopfes 86 unter Wirkung einer Kraft $P_1$ dargestellt. Man sieht, dass sich das linksseitige Ende der Schlitze 94 und 93c geschlossen hat, währenddem das linksseitige Ende des Schlitzes 93a bezüglich der Breite zugenommen hat.

Durch das Anstossen der linksseitigen Enden der beiden Stege 91 und 92 an die benachbarten Tastkörper-Wände ist ein Anschlag geschaffen, der einer weiteren Bewegung des Bereichs 83 entgegenwirkt.

In der Praxis beträgt der maximale Verschiebungsweg des Tastkopfes 86 gegenüber dem starren Bereich 84 des Tastkörpers 82 Bruchteile eines Millimeters; dies ist vollauf genügend, da der Messtaster im vorliegenden Fall für auf eine Referenzlage bezogene Präzisionsmessungen eines Gegenstandes und nicht für die absolute Massbestimmung verwendet wird. Deshalb ist auch die theoretisch vorhandene Ungenauigkeit bei der Verformung der Stege 91 und 92 völlig unbedeutend, da der Verschiebeweg sehr klein ist.

Genau das gleiche passiert, wenn man eine Messkraft in Richtung des Pfeiles $P_2$ auf die Messfläche 90b wirken lässt. Obwohl der Tastkopf 86 theoretisch in der Richtung der Messkraft auzuweichen bestrebt ist, wird er, wie vorstehend erwähnt, zu einer Diagonalbewegung zwischen den Pfeilen $P_1$ und $P_2$ gezwungen. Dadurch ist aber erreicht, dass mit einer einzigen Messvorrichtung, d.h. mit der Messuhr 72 gemäss Fig. 2, eine Verschiebung des Tastkopfes 86 in zwei senkrecht zueinander stehenden Richtungen (z.B. in Richtung des Pfeiles $P_1$ und in Richtung des Pfeiles $P_2$) ermittelt werden kann. Erstaunlicherweise gilt dies nicht nur für eine Beaufschlagung des Tastkopfes 86 in den zwei senkrecht zueinander stehenden Messrichtungen, sondern auch für jede Messkraft, die in einer beliebigen Richtung zwischen den beiden genannten Messrichtungen auf den Tastkopf 86 einwirkt. Mit anderen Worten, jede Kraft innerhalb des Sektors $P_1$ - $P_2$ auf den Tastkopf 86 resultiert in einer richtungsmässig gleichen Verschiebung des Tastkopfes 86 gegenüber dem starren Bereich 84.

Die Lage des Angriffspunktes der Messvorrichtung am Messtaster 80, d.h. die Auflage des Messfühlers 73 der Messuhr 72, ist an sich unkritisch, solange es sich dabei um eine exakt plane und zu den Messrichtungen in definierter Winkelstellung stehende Fläche handelt. Es bietet sich an, den Kopf 88 der Schraube 87, die den Tastkopf 86 hält, plan auszubilden und den Messfühler 73 fort anzusetzen.

Aus den Fig. 7 bis 10 ist der Aufbau und die Wirkungsweise der Arretiervorrichtung 50 ersichtlich. Gemäss Fig. 7 und 8 besitzt diese ein Blokkierjoch 53, bestehend aus einem Unterteil 53a und einem Oberteil 53b, die beide plattenartig ausgebildet und in geringem Abstand parallel zueinander angeordnet sind. Die beiden plattenartigen Teile 53a und 53b sind mittels eines lamellenartigen Verbindungsgliedes miteinander verbunden. Im vorliegenden Beispiel besteht das lamellenartige Verbindungsglied aus einem Materialsteg 54, der einstückig an die beiden Teile 53a und 53b angeformt ist. Der Unterteil 53a ist fest mit dem Gehäuse 49 des Schlittens 43 verbunden und erstreckt sich rechtwinklig zur Ausdehnung der Führungsschiene 42. Der Oberteil 53b, der in geringem Abstand parallel über dem Unterteil 53a und somit ebenfalls rechtwinklig zur Führungsschiene 42 verläuft, ist mit zwei seitlichen Fortsätzen 55 versehen, die die Führungsschiene 42 bzw. die darin ausgebildeten, V-förmigen Führungsnuten 42a seitlich übergreifen.

Beide Fortsätze 55 sind mit Blockierstiften 56 versehen, die als Gewindestift ausgebildet und in entsprechende Gewindebohrungen in den Fortsätzen 55 eingeschraubt sind. Das freie, den Nuten 42a abgewandte Ende jedes Blockierstiftes 56 trägt je eine Kontermutter 57, um die Stifte gegen unbeabsichtigtes Verstellen zu sichern. Das andere Ende der Blockierstifte 56 ist kegelig ausgebildet und taucht in die V-förmigen Nuten 42a ein. Das Oberteil 53b des Blockierjochs 53 ist mit einer Blockierschraube 58 versehen, deren stirnseitiges Ende, beim Eindrehen der Blockierschraube, gegen die zugewandte Oberfläche der Führungsschiene 42 in Auflage bringbar ist.

Durch die gewählte Anordnung ist der Oberteil 53b gegenüber dem Unterteil 53a innerhalb der Plattenebene in Richtung senkrecht zur Führungsschiene 42 beweglich, nicht jedoch in Richtung der Führungsschiene 42. Dies darum, weil der Steg 54 biegeelastisch, in Erstreckungsrichtung jedoch starr ist. Letzteres wird noch dadurch unterstützt, dass die Achse der Blockierstifte 56 exakt in der verlängerten Mittelebene durch den Steg 55 verläuft (Fig. 9).

Die Funktionsweise der Arretiervorrichtung 50 ist wie folgt: Im deblockierten Zustand ist die Schraube 58 gelöst und die beiden Blockierstifte 56 sind so eingestellt, dass ihre kegeligen Endbereiche mit geringem Spiel in die V-förmige Nut 42a eintauchen, ohne jedoch deren Wände zu berühren. Somit kann der Schlitten ungehindert nach oben und unten gefahren werden. Zum Blockieren der Schlittenbewegung wird die Schraube 58 angezogen, ihre Stirnfläche liegt auf der Führungsschiene 42 auf und der Oberteil 53b des Blockierjoches 53 bewegt sich, unter elastischer Verformung des Steges 54, von der Führungsschiene 42 weg. Der Betrag der Bewegung ist allerdings sehr gering, etwa in der Grössenordnung von Bruchteilen von Millimetern. Damit gelangen die kegeligen Enden der Blockierstifte 56 in Anlage an die Wände der V-förmigen Nut 42a und verhindern eine weitere Verschiebung des Schlittens 43. Die Blockierkraft-Übertragung erfolgt dabei vom Oberteil 53b über den Steg 55 auf den Unterteil 53a des Blockierjoches; da aber, wie erwähnt, der Steg 55 in Ausdehnungsrichtung starr ist, ist eine unverrückbare Blockierung gewährleistet.

Damit sichergestellt ist, dass die V-förmigen Nuten 42a, in denen ja die Kugeln der Kugellinearführung laufen, nicht beschädigt werden, besitzen die kegeligen Enden der Blockierstifte 56 derart schlanke Gestalt, dass sie in einem Bereich an die Wände der Nuten 42a anliegen, der von den Kugeln nicht berührt wird. Aus der Fig. 10 ist deutlich ersichtlich, dass die Blockierstifte 56 die Wand 59 der Nut in einem Bereich I berühren, der wesentlich tiefer im Nutinneren liegt als der Bereich II, auf dem sich die Kugeln abwälzen.

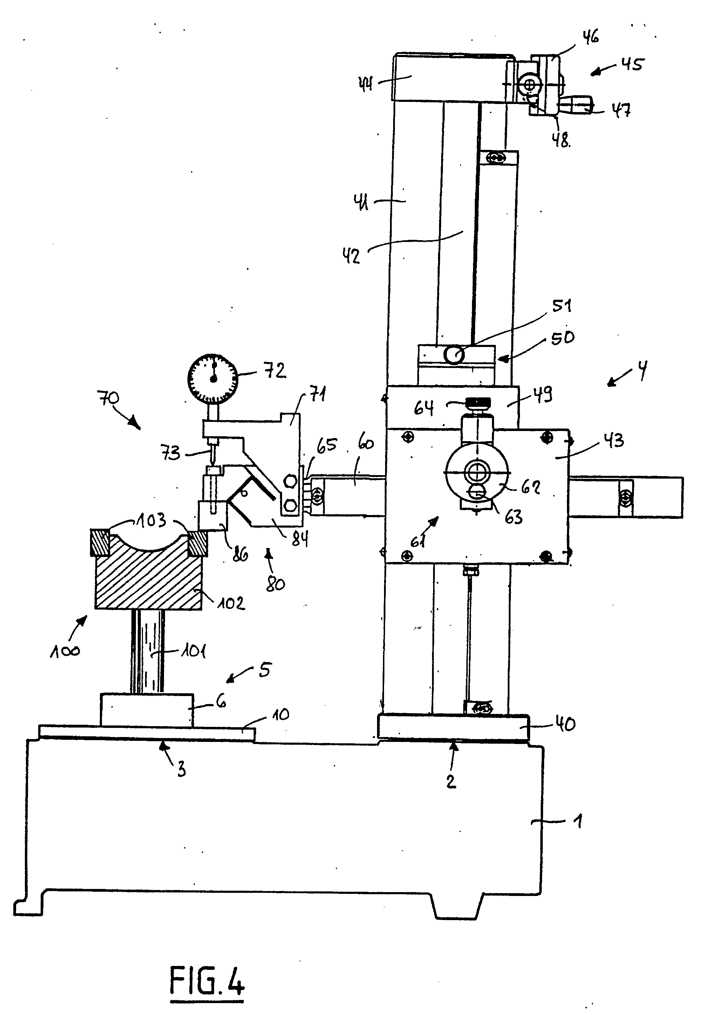

Anhand der Fig. 3 und 4 wird im folgenden als Beispiel, stellvertretend für zahlreiche andere Anwendungsmöglichkeiten der erfindungsgemässen Messvorrichtung, die Vermessung eines Werkzeuges erläutert. Ein Fräser 100 besitzt einen Schaft 101, der einen Fräserkopf 102 trägt und in welchem eine Mehrzahl von Schneidplatten 103 eingelassen sind. Der Schaft 101 ist in der Gegenstandsaufnahme 5, beispielsweise direkt in der Hülse 6 (Fig. 1) drehbar aufgenommen. Um den wirksamen Durchmesser des Fräserkopfes 102 zu bestimmen, wird der Schlitten 43 auf eine solche Höhe gefahren, dass der Tastkopf 86 in geeigneter Höhenlage ist, um gegen die Kante einer Schneidplatte 103 in Anlage gebracht werden zu können. Dann wird der Schlitten 43 blockiert, indem die Arretiereinrichtung 50 betätigt wird; eine unbeabsichtigte Höhenverstellung des Schlittens 43 ist damit ausgeschlossen. Nun wird die Meßschiene 60 in Richtung gegen den Fräser 100 hin ausgefahren, bis der Tastkopf 86 gegen die Seitenkante der Schneidplatte 103 anliegt. Durch Feinverschiebung der Meßschiene 60 kann sodann eine Lage derselben gesucht werden, bei welcher die Messuhr 72 den Wert "0" anzeigt, was einer genau definierten Lage des Tastkopfes 86 entspricht.

In diesem Zusammenhang muss noch darauf hingewiesen werden, dass die gesamte Messvorrichtung natürlich zuerst kalibriert werden muss, bevor Gegenstände ausgemessen werden können. Diese Kalibrierung geschieht einmal bei der ersten Inbetriebnahme bzw. immer dann, wenn das Abtastorgan geändert oder ausgewechselt worden ist. Es kann zum Beispiel ein Kalibrierdorn mit bekannten Abmessungen bezüglich Durchmesser und Höhe verwendet werden, der in die Gegenstandsaufnahme 5 eingeführt wird. Bei Anlage des Tastkopfes 86 an die Mantelfläche des Kalibrierdornes und Abgleich des Messuhr-Ausschlages auf den Wert "0" ist ein Referenzwert für das Mass der Verschiebung der Meßschiene festgelegt, der allen nachfolgenden Messungen als Berechnungsgrundlage dient. Entsprechendes gilt für die Höhenlage: Der Tastkopf 86 wird mit seiner unteren Messfläche gegen die Stirnfläche des Kalibrierdornes gefahren und die Messuhr auf den Wert "0" abgeglichen. Damit ist ein Referenzwert für die Höhenlage des Schlittens 43 festgelegt.

Zurückkommend auf das Beispiel gemäss Fig. 3 wird der ermittelte Wert des Auszugs der Meßschiene 60, bei Anzeige "0" der Messuhr 72, mit dem bekannten Referenzwert in Relation gebracht und daraus der effektive, wirksame Fräserkopf-Durchmesser abgeleitet. In ähnlicher Weise kann auch die Rundlaufgenauigkeit des Fräsers 100 überprüft werden, indem der Fräser 100 in der Aufnahme 5 gedreht wird, so dass der Durchmesser an verschiedenen Peripheriepunkten ermittelt werden kann.

Im Beispiel gemäss Fig. 4 ist derselbe Fräser 100 bezüglich seiner effektiven Höhe zu vermessen. Zu diesem Zwecke wird, ausgehend von der Situation in Fig. 3, die Meßschiene 60 etwas zurückgefahren, die Arretiervorrichtung 50 gelöst, der Schlitten 43 soweit nach oben bewegt, dass sich der Tastkopf 86 über der auszumessenden Schneidplatte 103 befindet, eine gegebenenfalls vorhandene, entsprechende Arretiervorrichtung für die Bewegung der Meßschiene aktiviert und schliesslich der Schlitten 43 soweit heruntergefahren, bis der Tastkopf 86 mit der Oberfläche der Schneidplatte 103 in Anlage kommt. Es verbleibt, den Schlitten solange fein zu verstellen, bis die Messuhr 72 den Wert "0" anzeigt, und die ermittelte Höhenlage des Schlittens 43 mit dem bekannten Höhenlage-Referenzwert in Relation zu setzen, um daraus die wirksame Höhe des Fräsers 100 abzuleiten. Wie vorher erwähnt kann auch hier der Fräser gedreht werden, um mehrere Messungen z.B. an mehreren Schneidplatten 103 vorzunehmen.

Es fällt auf, dass die gesamte Messtaster-Anordnung 70 bei Fig. 3 und 4 gleich ist, obwohl zwei verschiedene, zueinander senkrechte Dimensionen ermittelt werden konnten. Dies ist darauf zurückzuführen, dass die Verschiebung des Tastkopfes 86 gegenüber dem starren Bereich 84 des Messtasters betrags- und richtungsmässig stets gleich ist, egal, ob die Messung durch Anlage der vorderen Messfläche 90b oder durch Anlage der unteren Messfläche 90a erfolgt. Selbst schräg verlaufende Flächen eines Gegenstandes können auf diese Weise vermessen werden, da im Messergebnis keine Abweichung auftritt, wenn die Messkraft in einem beliebigen Winkel zwischen den beiden zuvor erwähnten Messkraft-Richtungen (horizontal und vertikal) wirkt. Mit der erfindungsgemässen Messvorrichtung ist somit ein Instrument geschaffen, welches gestattet, zwei senkrecht zueinander verlaufende Messrichtungen sowie alle dazwischenliegenden Messrichtungen zu überwachen bzw. deren Änderung zu erfassen, ohne den Messaufbau konstruktiv zu verändern. Insbesondere ist es auch leicht möglich, die Formänderung eines Werkstük-

kes bzw. die genaue Lage derselben mit derselben Messvorrichtung, ohne diese zu verändern, zu ermitteln, z.B. der Übergang des endseitigen, kegeligen Teils eines Spiralbohrers in den zylindrischen Bohrerteil oder den Winkel bzw. die Gleichmässigkeit einer konischen Ansenkung in einem Werkstück.

Besonders bei elektrischer Lageerfassung der Position der Meßschiene einerseits und der Höhenlage des Schlittens andererseits ist ein sehr bequemes, rasches und genaues Arbeiten ermöglicht. Zweckmässigerweise kann dann ein Steuergerät verwendet werden, welches die zuvor erwähnten Referenzwerte gespeichert hat und automatisch mit dem aktuellen Positionswert der Meßschiene und des Schlittens in Relation bringt sowie den abgeleiteten Messwert anzeigt. Bei einem solchen Gerät ist es auch möglich, verschiedene Referenzwerte vorzuprogrammieren, z.B. individuelle Maschinenwerte; wenn dann ein bestimmtes Werkzeug auf verschiedenen Bearbeitungsmaschinen Verwendung finden soll, wird das Werkzeug vor dem Einsetzen in die Maschine mit der hier beschriebenen Messvorrichtung ausgemessen, wobei die zur betreffenden Maschine gehörigen, gespeicherten Referenzwerte abgerufen werden. Die ermittelten Messdaten können dann als Korrekturwerte direkt in die Maschine eingegeben werden.

### Ansprüche

1. Messvorrichtung zur Ermittlung der Abmessungen eines Gegenstandes in drei Dimensionen, mit einer Grundplatte (1), mit an der Grundplatte vorgesehenen Haltemitteln (5) zur Aufnahme des zu vermessenden Gegenstandes und mit einer im Abstand von den Haltemitteln (5) auf der Grundplatte (1) angebrachten Meßschlitten-Anordnung (4) mit einem Meßschlitten (43), der an einer Führungsschiene (42) entlang einer ersten Achse verschiebbar gelagert und mit Arretiermitteln (50) zur Blockierung mindestens seiner Verschiebebewegung entlang der Führungsschiene (42) versehen ist und der eine entlang einer zweiten, senkrecht zur genannten ersten Achse verlaufenden Achse verschiebbar und arretierbar gelagerte Meßschiene (60) aufweist, an deren Ende ein Messtaster (80) mit einem Tastkopf (86) angeordnet ist, dadurch gekennzeichnet, dass die Haltemittel (5) ein in der Grundplatte (1) drehbar gelagertes Spannorgan (6) zur Aufnahme des Gegenstandes aufweisen, und dass der Messtaster (80) durch einen in zwei gegeneinander verschiebbare Bereiche (83, 84) unterteilten, einteiligen Tastkörper (82) gebildet ist, wobei an einem ersten Bereich (83) ein mit dem zu messenden Werkstück in Anlage bringbarer und mit der Messvorrichtung wirkungsverbundener Tastkopf (86) befestigt ist, der durch einen fest mit dem ersten Bereich (83) verbundenen, kubischen Körper gebildet ist, welcher mindestens zwei freiliegende, untereinander einen Winkel von 90° einschliessende Messflächen (90a - 90d) besitzt, wobei der zweite Bereich (84) mit Hilfe von elastisch verformbaren, unter einem Winkel von 45° zu den Messflächen (90a - 90d) des Tastkopfs (86) verlaufenden Verbindungsgliedern (91, 92) mit dem genannten ersten Bereich (83) verbunden ist, wobei zur Bildung der Verbindungsglieder (91, 92) der einteilige Tastkörper mit Hilfe von im Tastkörper (82) ausgebildeten, unter 45° zu den Messflächen (90a - 90d) verlaufenden Schlitzen (93a, 93b, 93c, 94) in die genannten ersten und zweiten Bereiche (83, 84) unterteilt ist, und wobei der Messtaster (80) mit einem Messgerät (72) zur Anzeige der relativen Lage des Tastkopfes (86) gegenüber dem Messtaster-Körper (82) versehen ist.

2. Messvorrichtung zur Ermittlung der Abmessungen eines Gegenstandes in drei Dimensionen, mit einer Grundplatte (1), mit an der Grundplatte vorgesehenen Haltemitteln (5) zur Aufnahme des zu vermessenden Gegenstandes und mit einer im Abstand von den Haltemitteln (5) auf der Grundplatte (1) angebrachten Meßschlitten-Anordnung (4) mit einem Meßschlitten (43), der an einer Führungsschiene (42) entlang einer ersten Achse verschiebbar gelagert und mit Arretiermitteln (50) zur Blockierung mindestens seiner Verschiebebewegung entlang der Führungsschiene (42) versehen ist und der eine entlang einer zweiten, senkrecht zur genannten ersten Achse verlaufenden Achse verschiebbar und arretierbar gelagerte Meßschiene (60) aufweist, an deren Ende ein Messtaster (80) mit einem Tastkopf (90) angeordnet ist, dadurch gekennzeichnet, dass die Haltemittel (5) ein in der Grundplatte (1) drehbar gelagertes Spannorgan (6) zur Aufnahme des Gegenstandes aufweisen, und dass der Messtaster (80) durch einen in zwei gegeneinander verschiebbare Bereiche (83, 84) unterteilten Tastkörper (82) gebildet ist, wobei an einem ersten Bereich (83) ein mit dem zu messenden Werkstück in Anlage bringbarer und mit der Messvorrichtung wirkungsverbundener Tastkopf (86) befestigt ist, der durch einen fest mit dem ersten Bereich (83) verbundenen, kubischen Körper gebildet ist, welcher mindestens zwei freiliegende, untereinander einen Winkel von 90° einschliessende Messflächen (90a - 90d) besitzt, wobei die beiden Bereiche (83, 84) des Tastkörpers (82) durch getrennte Elemente gebildet sind, wobei der zweite Bereich (84) mit Hilfe von zwei unter einem Winkel von 45° zu den Messflächen (90a - 90d) des Tastkopfs (86) verlaufenden Blattfederelementen mit dem genannten ersten Bereich (83) verbunden ist, und wobei der Messtaster (80) mit einem Messgerät (72) zur Anzeige der relativen Lage des Tastkopfes (86) gegenüber dem Messtaster-Körper (82) versehen ist.

3. Messvorrichtung nach Patentanspruch 1 oder 2, dadurch gekennzeichnet, dass das Spannorgan mindestens eine Hülse (6) mit konischer Bohrung (7) zur formschlüssigen Aufnahme eines konischen Werkzeugschaftes aufweist, welche mittels Kugellagern (8, 9) in einer Vertiefung (12) der Grundplatte (1) drehbar gelagert ist.

4. Messvorrichtung nach den Patentansprüchen 1 und 3 oder nach den Patentansprüchen 2 und 3, dadurch gekennzeichnet, dass das Spannorgan (6) weitere Spannelemente (14) umfasst, die eine in Form und Abmessungen der Hülse (6) entsprechende Aussenfläche besitzen, derart, dass sie formschlüssig in die Hülse (6) einsetzbar sind.

5. Messvorrichtung nach Anspruch 4, dadurch gekennzeichnet, dass die weiteren Spannelemente (14) durch weitere Hülsen (15) mit geringerer konischer Aufnahmebohrung (17), durch hydraulische Spannfutter (25), durch Kupplungselemente (35) mit konischem Schaft (36) oder dgl. gebildet sind.

6. Messvorrichtung nach einem der vorangehenden Patentansprüche, dadurch gekennzeichnet, dass der Meßschlitten (43) erste Arretiermittel (50) zur Blockierung seiner Verschiebebewegung entlang der Führungsschiene (42) und zweite Arretiermittel zur Blockierung der Verschiebebewegung der Meßschiene (60) aufweist.

7. Messvorrichtung nach Patentanspruch 1, 2 oder 5, bei welcher zur Führung des Meßschlittens (43) entlang der Führungsschiene (42) und zur Führung der Meßschiene (60) innerhalb des Meßschlittens (43) jeweils eine Kugellinear-Führung mit Kugeln vorgesehen ist, die in V-förmigen Führungsnuten (42a) laufen, dadurch gekennzeichnet, dass die Arretiermittel (50) ein Blokkierjoch (52) aufweisen, mit einem starr am Meßschlitten-Gehäuse (49) befestigten, plattenartigen, im wesentlichen rechtwinklig zur Bewegungsrichtung des Meßschlittens (43) bzw. der Meßschiene (60) verlaufenden Unterteil (53a) und einem parallel und im Abstand zum Unterteil angeordneten Oberteil (53b), welcher zwei seitliche, die gegenüberliegenden V-förmigen Führungsnuten (42a) übergreifende Fortsätze (55) mit in die V-förmigen Führungen (42a) eintauchenden Blockierstiften (56) aufweist und welcher gegenüber dem Unterteil (53a) innnerhalb der Plattenebene senkrecht zur Bewegungsrichtung des Meßschlittens (43) bzw. der Meßschiene (60) beweglich, in Bewegungsrichtung des Meßschlittens (43) bzw. der Meßschiene (60) aber starr verbunden ist.

8. Messvorrichtung nach Patentanspruch 7, dadurch gekennzeichnet, dass das Oberteil (53b) mit einer Blockierschraube (58) versehen ist, mittels welcher das Oberteil (53b) gegenüber dem Unterteil (53a) verschiebbar ist.

9. Messvorrichtung nach Patentanspruch 7 oder 8, dadurch gekennzeichnet, dass die Verbindung zwischen Oberteil (53a) und Unterteil (53b) mittels eines lamellenartigen Verbindungsgliedes (54) erfolgt, das sich in Bewegungsrichtung des Meßschlittens (43) bzw. der Meßschiene (60) erstreckt.

10. Messvorrichtung nach Patentanspruch 9, dadurch gekennzeichnet, dass das lamellenartige Verbindungsglied (54) einstückig am Ober- und Unterteil (53a, 53b) angeformt ist.

11. Messvorrichtung nach einem der Ansprüche 7 bis 10, dadurch gekennzeichnet, dass die Blockierstifte (56) die Fortsätze (55) durchdringende Gewindestifte mit gegen die V-förmigen Führungsnuten (42a) gerichteten, konischen Endbereichen sind, die am entgegengesetzten Ende Kontermuttern (57) tragen.

12. Messvorrichtung nach Patentanspruch 11, dadurch gekennzeichnet, dass die konischen Endbereiche der Blockierstifte (56) derart schmal ausgebildet sind, dass sie in die V-förmigen Führungsnuten (42a) einführbar und gegen die Seitenflächen der Nuten in Anlage bringbar sind, ohne die nutseitige Lauffläche der Führungskugeln zu berühren.

13. Messvorrichtung nach einem der Patentansprüche 7 bis 12, dadurch gekennzeichnet, dass die Mittelachsen der Blockierstifte (56) zumindest angenähert in der verlängerten Ebene des lamellenartigen Verbindungsgliedes (54) liegen.

14. Messvorrichtung nach Patentanspruch 1, dadurch gekennzeichnet, dass mindestens ein Verbindungsglied (91) zwischen den genannten ersten und zweiten Bereichen (83, 84) durch einen schmalen Materialsteg des Tastkörpers (82) gebildet ist, der zwischen zwei parallel verlaufenden Schlitzen (93a, 94) liegt.

15. Messvorrichtung nach Patentanspruch 1, dadurch gekennzeichnet, dass mindestens ein Verbindungsglied (92) zwischen den genannten ersten und zweiten Bereichen (83, 84) durch einen schmalen Materialsteg des Tastkörpers (82) gebildet ist, der zwischen einer unter einem Winkel von 45° zu den Messflächen (10a-10d) verlaufenden Aussenkante (95) des Tastkörpers (82) und einem parallel dazu verlaufenden Schlitz (93c) liegt.

## Claims

1. A measurement apparatus for ascertaining the measurements of an object in three dimensions, with a base plate (1) with holding means (5) provided on the base plate for receiving the object to be measured, and with a measurement carriage arrangement (4) secured to the base plate (1) at a distance from the holding means (5) with a measurement carriage (43) mounted on a guide rail (42) for displacement along a first axis and provided with arresting means (50) for blocking at least its displacement movement along the guide rail (42), and which carriage has a measurement bar (60) extending along a second axis perpendicular to the said first axis and being displaceably and arrestably mounted, at the end of which measurement bar there is arranged a measurement feeler means (80) with a feeler head (86), characterized in that the holding means (5) have a clamping device (6) rotatably mounted in the base plate (1) for receiving the object, and in that the measurement feeler means (80) is formed by an integral feeler member (82) subdivided into two sectors (83, 84) displaceable with respect to each other, a feeler head (86) being mounted on a first sector (83) that can be brought to bear on the workpiece to be measured and connected to the measurement apparatus for action, which feeler head is formed by a cube rigidly connected to the first sector (83), that has at least two free measurement surfaces (90a-90d) forming together an angle of 90°, wherein the second sector (84) is connected to the said first sector (83) by means of elastically deformable connecting members (91, 92) extending at an angle of 45° to the measurement surfaces (90a-90d) of the feeler head (86), wherein the integral feeler member is subdivided into the said two first and second sectors (83, 84) by means of slits (93a, 93b, 93c, 94) formed in the feeler member (82) and extending at 45° to the measurement surfaces (90a-90d) in order to form the connecting members (91, 92), and wherein the measurement feeler means (80) is provided with a measurement instrument (72) for indicating the relative position of the feeler head (86) relative to the feeler member (82).

2. A measurement apparatus for ascertaining the measurements of an object in three dimensions, with a base plate (1) with holding means (5) provided on the base plate for receiving the object to be measured, and with a measurement carriage arrangement (4) secured to the base plate (1) at a distance from the holding means (5) with a measurement carriage (43) mounted on a guide rail (42) for displacement along a first axis and provided with arresting means (50) for blocking at least its displacement movement along the guide rail (42). and which carriage has a measurement bar (60) extending along a second axis perpendicular to the said first axis and being displaceably and arrestably mounted, at the end of which measurement bar there is arranged a measurement feeler means (80) with a feeler head (90), characterized in that the holding means (5) have a clamping device (6) rotatably mounted in the base plate (1) for receiving the object, and in that the measurement feeler means (80) is formed by a feeler member (82) subdivided into two sectors (83, 84) displaceable with respect to each other, wherein a feeler head (86) is mounted on a first sector (83) that can be brought to bear on the workpiece to be measured and connected to the measurement apparatus for action, which feeler head is formed by a cube rigidly connected to the first sector (83), that has at least two free measurement surfaces (90a-90d) forming together an angle of 90°, wherein the two sectors (83, 84) of the feeler member (82) are formed by separate elements, wherein the second sector (84) is connected to the said first sector (83) by means of two leaf spring elements extending at an angle of 45° to the measurement surfaces (90a-90d) of the feeler head (86), and wherein the measurement feeler means (80) is provided with a measurement instrument (72) for indicating the relative position of the feeler head (86) relative to the feeler member (82).

3. A measurement apparatus according to patent claim 1 or 2, characterized in that the clamping device has at least one sleeve (6) with a conical bore (7) for the conjugate accommodation of a conical tool shaft, which sleeve is rotatably mounted in a recess (12) of the base plate (1) by means of ball bearings (8,9).

4. A measurement apparatus according to patent claim 1 and 3 or according to patent claims 2 and 3, characterized in that the clamping device (6) comprises further clamping elements (14) having an outer surface corresponding in shape and dimensions to the sleeve (6) in such a way that they can be inserted with a form fit into the sleeve (6).

5. A measurement apparatus according to patent claim 4 characterized in that the further clamping elements (14) are formed by further sleeves (15) with a smaller conical receiving bore (17), by hydraulic chucks (25), by coupling elements (35) with a conical shaft (36) or similar.

6. A measurement apparatus according to one of the preceding claims, characterized in that the measurement carriage (43) has first arresting means (50) for blocking its displacement movement along the guide rail (42) and second arresting means for blocking the displacement movement of the measurement bar (60).

7. A measurement apparatus according to patent claims 1, 2 or 5, wherein provision is made respectively for a linear ball guideway with balls, for guiding the measurement carriage (43) along the guide rail (42) and for guiding the measurement bar (60) within the measurement carriage (43), which guideways run in V-shaped guide grooves (42a), characterized in that the arresting means (50) have a locking yoke (52) with a plate-type bottom part (53a) extending substantially at right angles to the direction of movement of the measurement carriage (43) or of the measurement bar (60) and rigidly secured to the measurement carriage casing (49), and with a top part (53b) arranged parallel to, and at a distance from the bottom part, which top part has two lateral extensions (55) with locking pins (56) projecting into the V-shaped guideways (42a), which extensions overlap the opposed V-shaped guide grooves (42a), and which upper part is connected, movably relative to the bottom part (53a) in the plate plane perpendicular to the direction of movement of the measurement carriage (43) or of the measurement bar (60) but rigidly in the direction of movement of the measurement carriage (43) or of the measurement bar (60).

8. A measurement apparatus according to patent claim 7, characterized in that the upper part (53b) is provided with a locking screw (58), by means of which the upper part (53b) can be displaced relative to the bottom part (53a).

9. A measurement apparatus according to patent claim 7 or 8, characterized in that the connection between the upper part (53b) and the bottom part (53a) is effected by means of a blade-type connecting member (54) extending in the direction of movement of the measurement carriage (43) or of the measurement bar (60).

10. A measurement apparatus according to patent claim 9, characterized in that the blade-type connecting member (54) is integrally formed on the upper and lower part (53a, 53b).

11. A measurement apparatus according to one of claims 7 to 10, characterized in that the locking pins (56) passing through the extensions (55) are set screws with conical end zones directed towards the V-shaped guide grooves (42a), which set screws carry lock nuts (57) at their opposite ends.

12. A measurement apparatus according to patent claim 11, characterized in that the conical end zones of the locking pins (56) are designed to be so narrow that they can be inserted into the V-shaped guide grooves (42a) and can be brought to bear against the lateral faces of the grooves without touching the running surface of the guide balls on the side of the groove.

13. A measurement apparatus according to patent claims 7 to 12, characterized in that the median axes of the locking pins (58) lie at least approximately in the extended plane of the blade-type connecting member (54).

14. A measurement apparatus according to patent claim 1, characterized in that at least one connecting member (91) is formed between the said first and second sectors (83, 84) by a narrow material web of the feeler member (82), which web lies between two parallel slits (93a, 94).

15. A measurement apparatus according to patent claim 1, characterized in that at least one connecting member (92) is formed between the said first and second sectors (83, 84) by a narrow material web of the feeler member (82), which web lies between an outer edge (95) of the feeler member (82) extending at an angle of 45° to the measurement surfaces (10a-10d) and a slit (93c) extending parallel thereto.

**Revendications**

1. Dispositif de mesure pour la détermination des dimensions d'un objet selon trois coordonnées, comprenant une plaque de base (1), des moyens de fixation (5), prévus sur la plaque de base, pour recevoir l'objet à mesurer, et un agencement de chariot de mesure (4), disposé sur la plaque de base (1), à distance des moyens de fixation (5), comprenant un chariot de mesure (43) qui est monté de manière à pouvoir être déplacé sur un rail de guidage (42), le long d'un premier axe, et est pourvu de moyens de blocage (50) pour bloquer au moins son déplacement le long du rail de guidage (42), et qui comporte une barre de mesure (60), montée de manière à pouvoir être déplacée et bloquée le long d'un deuxième axe, orienté perpendiculairement au premier axe, à l'extrémité de laquelle est disposé un palpeur de mesure (80) comportant un palpeur (86), caractérisé en ce que les moyens de fixation (5) présentent un organe de serrage (6), monté en rotation dans la plaque de base (1), pour recevoir l'objet, et que le palpeur de mesure (80) est formé d'un corps de palpeur (82), d'une seule pièce, divisé en deux zones (83, 84) pouvant se déplacer l'une par rapport à l'autre, un palpeur (86), pouvant être amené en contact avec la pièce usinée à mesurer et agissant conjointement avec le dispositif de mesure, étant fixé à une première zone (83) et formé d'un corps cubique, relié à la zone (83) d'une manière fixe, qui possède au moins deux surfaces de mesure (90a-90d) dégagées, formant entre elles un angle de 90°, et la deuxième zone (84) étant reliée à ladite première zone (83) au moyen d'éléments de jonction (91, 92) élastiquement déformables, orientés selon un angle de 45° par rapport aux surfaces de mesure (90a-90d) du palpeur (86), le corps de palpeur d'une seule pièce étant divisé, pour former les éléments de jonction (91, 92), en première et deuxième zones (83, 84) susmentionnées, au moyen de fentes (93a, 93b, 93c, 94) réalisées dans le corps de palpeur (82) et orientées selon un angle de 45° par rapport aux surfaces de mesure (90a - 90d), et le palpeur de mesure (80) étant pourvu d'un appareil de mesure (72) servant à indiquer la position relative du palpeur (86) par rapport au corps (82) du palpeur de mesure.

2. Dispositif de mesure pour la détermination des dimensions d'un objet selon trois coordonnées, comprenant une plaque de base (1), des moyens de fixation (5), prévus sur la plaque de base, pour recevoir l'objet à mesurer, et un agencement de chariot de mesure (4), disposé sur la plaque de base (1), à distance des moyens de fixation (5), comprenant un chariot de mesure (43) qui est monté de manière à pouvoir être déplacé sur un rail de guidage (42), le long d'un premier axe, et est pourvu de moyens de blocage (50) pour bloquer au moins son déplacement le long du rail de guidage (42), et qui comporte une barre de mesure (60), montée de manière à pouvoir être déplacée et bloquée le long d'un deuxième axe, orienté perpendiculairement au premier axe, à l'extrémité de laquelle est disposé un palpeur de mesure (80) comportant un palpeur (90), caractérisé en ce que les moyens de fixation (5) présentent un organe de serrage (6), monté en rotation dans la plaque de base (1), pour recevoir l'objet, et que le palpeur de mesure (80) est formé d'un corps de palpeur (82), divisé en deux zones (83, 84) pouvant se déplacer l'une par rapport à l'autre, un palpeur (86), pouvant être amené en contact avec la pièce usinée à mesurer et agissant conjointement avec le dispositif de mesure, étant fixé à une première zone (83) et formé d'un corps cubique, relié à la zone (83) d une manière fixe, qui possède au moins deux surfaces de mesure (90a-90d) dégagées, formant entre elles un angle de 90°, les deux zones (83, 84) du corps de palpeur (82) étant formées d'éléments séparés, la deuxième zone (84) étant reliée à ladite première zone (83) au moyen de deux éléments à ressorts à lames, orientés selon un angle de 45° par rapport aux surfaces de mesure (90a-90d) du palpeur (86), et le palpeur de mesure (80) étant pourvu d'un appareil de mesure (72) servant à indiquer la position relative du palpeur (86) par rapport au corps (82) du palpeur de mesure.

3. Dispositif de mesure selon la revendication 1 ou 2, caractérisé en ce que l'organe de serrage comporte au moins une enveloppe (6), présentant un perçage conique (7), pour recevoir, par complémentarité de formes, une tige conique de pièce usinée, ladite enveloppe (6) étant montée en rotation dans un renfoncement (12) de la plaque de base (1) au moyen de roulements à billes (8, 9).

4. Dispositif de mesure selon les revendications 1 et 3 ou selon les revendications 2 et 3, caractérisé en ce que l'organe de serrage (6) comprend d'autres éléments de serrage (14) qui possèdent une face extérieure correspondant à la forme et aux dimensions de l'enveloppe (6) d'une manière telle qu'ils peuvent être insérés dans ladite enveloppe (6) par complémentarité de formes.

5. Dispositif de mesure selon la revendication 4, caractérisé en ce que les éléments de serrage supplémentaires (14) sont formés d'enveloppes supplémentaires (15), présentant un perçage conique de réception (17) moindre, de mandrins de serrage hydrauliques (25), d'éléments de couplage (35) à tige conique (36), ou analogues.

6. Dispositif de mesure selon l'une des revendications précédentes, caractérisé en ce que le chariot de mesure (43) comporte une première série de moyens de blocage (50), pour le blocage de son déplacement le long du rail de guidage (42), et une deuxième série de moyens de blocage, pour le blocage du déplacement de la barre de mesure (60).

7. Dispositif de mesure selon la revendication 1, 2 ou 5, dans lequel il est prévu, respectivement pour le guidage du chariot de mesure (43) le long du rail de guidage (42) et pour le guidage de la barre de mesure (60) à l'intérieur du chariot de mesure (43), un guide linéaire à billes , comprenant des billes qui roulent dans des rainures de guidage (42a) en V, caractérisé en ce que les moyens de blocage (50) comportent une culasse de blocage (52), comprenant une partie inférieure (53a), fixée rigidement au châssis (49) du chariot de mesure, présentant la forme d'une plaque et orientée pratiquement à angle droit par rapport à la direction de déplacement du chariot de mesure (43) et de la barre de mesure (60), et une partie supérieure (53b), disposée parallèlement et à distance de la partie inférieure, qui comporte deux prolongements latéraux (55) s'engageant dans les rainures de guidage (42a) en V, se faisant face, au moyen de tiges de blocage (56) pénétrant dans lesdites rainures de guidage (42a) en V, et qui, par rapport à la partie inférieure (53a), peut se déplacer dans le plan de la plaque, perpendiculairement à la direction de déplacement du chariot de mesure (43) et de la barre de mesure (60), mais qui est solidaire de la direction de déplacement du chariot de mesure (43) ou de la barre de mesure (60).

8. Dispositif de mesure selon la revendication 7, caractérisé en ce que la partie supérieure (53b) est pourvue d'une vis de blocage (58) servant à déplacer la partie supérieure (53b) par rapport à la partie inférieure (53a).

9. Dispositif de mesure selon la revendication 7 ou 8, caractérisé en ce que la jonction entre la partie supérieure (53a) et la partie inférieure (53b) est réalisée au moyen d'un élément de jonction (54) en forme de lamelle, qui s'étend dans la direction de déplacement du chariot de mesure (43) et de la barre de mesure (60).

10. Dispositif de mesure selon la revendication 9, caractérisé en ce que l'élément de jonction (54) en forme de lamelle est réalisé d'une seule pièce sur les parties supérieure et inférieure (53a, 53b).

11. Dispositif de mesure selon l'une des revendications 7 à 10, caractérisé en ce que les tiges de blocage (56) sont des vis sans tête, pénétrant dans les prolongements (55) et comprenant des zones d'extrémité coniques, dirigées vers les rainures de guidage (42a) en V, qui, à l'extrémité opposée, portent des contre-écrous (57).

12. Dispositif de mesure selon la revendication 11, caractérisé en ce que les zones d'extrémité coniques des tiges de blocage (56) sont réalisées avec une étroitesse telle qu'elles peuvent s'engager dans les rainures de guidage (42a) en V et être amenées en contact avec les faces latérales des rainures, sans toucher la surface de roulement, du côté rainure, des billes de guidage.

13. Dispositif de mesure selon l'une des revendications 7 à 12, caractérisé en ce que les axes médians des tiges de blocage (56) sont situés, au moins approximativement, dans la prolongation du plan de l'élément de jonction (54) en forme de lamelle.

14. Dispositif de mesure selon la revendication 1, caractérisé en ce qu au moins un élément de jonction (91) est formé, entre lesdites première et deuxième zones (83, 84), par un étroit montant de matériau formant le corps de palpeur (82), qui est situé entre deux fentes (93a, 94) orientées parallèlement entre elles.

15. Dispositif de mesure selon la revendication 1, caractérisé en ce qu'au moins un élément de jonction (92) est formé, entre lesdites première et deuxième zones (83, 84), par un étroit montant de matériau formant le corps de palpeur (82), qui est situé entre un bord extérieur (95) du corps de palpeur (82), formant un angle de 45° avec les surfaces de mesure (10a-10d), et une fente (93c) orientée parallèlement à ce bord extérieur (95).

FIG.1

**FIG.2**

FIG. 3

FIG.4

FIG.5

FIG.6

FIG.7

FIG.8

FIG.9

FIG.10